# EUROPEAN PATENT APPLICATION

(11) **EP 4 239 376 A1**
(43) Date of publication of application: **06.09.2023**
(21) Application number: 23159798.0
(22) Date of filing: 02.03.2023
(51) Int. Cl.: G01T 1/20

(54) **SYSTEMS, DEVICES AND METHODS FOR A PENCIL BEAM X-RAY SCANNER**

(30) Priority: 03.03.2022 US 202263316119 P
(71) Applicant: Seethru AI Inc., Chelmsford MA 01824 (US)
(72) Inventor: Al-Kofahi, Omar, Chelmsford (US)
(74) Representative: Vossius & Partner Patentanwälte Rechtsanwälte mbB

(57) **Abstract**

A multi-channel X-ray detector can include a first detector channel and a second detector channel. The first detector channel can include a first scintillation light guide component and a second scintillation light guide component arranged transverse to the first scintillation light guide component. The first and second scintillation light guide components can be mechanically and optically coupled to one another. The second detector channel can include a third scintillation light guide component adjoining the first scintillation light guide component, and a fourth scintillation light guide component arranged transverse to the third scintillation light guide component and adjoining the second scintillation light guide component. The third and fourth scintillation light guide components can be mechanically and optically coupled to one another.

## Description

### CROSS-REFERENCE TO RELATED PATENT APPLICATIONS

This application claims priority to U.S. Provisional Application No. 63/316,119 filed on March 3, 2022, and titled "PENCIL BEAM X-RAY SCANNER," which is incorporated herein by reference in its entirety.

### BACKGROUND

The present invention relates generally to the field of non-intrusive inspection (NII) of objects using X-ray radiation. X-ray radiation is commonly used to perform NII of objects in various fields, such as industrial applications, medical imaging and security inspection, among others.

An X-ray scanning system can emit X-ray beams in the form of a cone beam, a fan beam or a scanning pencil beam. An x-ray beam interacts with an object according to two main processes, namely Compton scattering and Photoelectric absorption. An X-ray pencil beam spans a small solid angle, compared to a cone or a fan beam, and hence results in lower X-ray dose delivered to scanned objects. To scan an object, a scanning pencil beam of X-rays interacts with an object generating Compton scatter, some of which is captured by one or more scatter detectors.

### SUMMARY

According to at least one aspect, a multi-channel X-ray detector ac include a first detector channel and a second detector channel. The first detector channel can include a first scintillation light guide component and a second scintillation light guide component arranged transverse to the first scintillation light guide component. The first and second scintillation light guide components can be mechanically and optically coupled to one another. The second detector channel can include a third scintillation light guide component adjoining the first scintillation light guide component, and a fourth scintillation light guide component arranged transverse to the third scintillation light guide component and adjoining the second scintillation light guide component. The third and fourth scintillation light guide components can be mechanically and optically coupled to one another.

The first detector channel can include a light sensor mounted on, or optically coupled to, the first scintillation light guide component and a second light sensor mounted on, or optically coupled to, the second scintillation light guide component, and the second detector channel can include a third light sensor mounted on, or optically coupled to, the third scintillation light guide component and a fourth light sensor mounted on, or optically coupled to, the fourth scintillation light guide component.

The first scintillation light guide component can include a first surface configured to be exposed to incident X-rays. The first and third light sensors c according to at least one of:
(i) the first light sensor is mounted on, or optically coupled to, a portion of the first surface of the first scintillation light guide component, such that the portion of the first surface of the first scintillation light guide component is shielded from the incident X-rays by at least the second and fourth scintillation light guide components,
(ii) the first light sensor is mounted on, or optically coupled to, a first ledge structure extending from the first scintillation light guide component along a direction transverse to a main axis of the first scintillation light guide component,
(iii) the first light sensor is mounted on, or optically coupled to, a second surface of the first scintillation light guide component that is transverse to the first surface of the first scintillation light guide component,
(iv) the first light sensor is mounted on, or optically coupled to, a third surface of the first scintillation light guide component opposite to the first surface of the first scintillation light guide component,
(v) the third light sensor is mounted on, or optically coupled to, a portion of a first surface of the third scintillation light guide component parallel to the first surface of the first scintillation light guide component, such that the portion of the first surface of the third scintillation light guide component is shielded from the incident X-rays by at least the second and fourth scintillation light guide components,
(vi) the third light sensor is mounted on, or optically coupled to, a second ledge structure extending from the third scintillation light guide component along a direction transverse to a main axis of the third scintillation light guide component, or
(vii) the third light sensor is mounted on, or optically coupled to, a second surface of the third scintillation light guide component that is transverse to the first surface of the first scintillation light guide component.

The second scintillation light guide component can include a first surface configured to be exposed to incident X-rays. The second and fourth light sensors c according to at least one of:
(i) the second light sensor is mounted on, or optically coupled to, a second surface of the second scintillation light guide component that is transverse to the first surface of the second scintillation light guide component,
(ii) the second light sensor is mounted on, or optically coupled to, a first ledge structure extending from the second scintillation light guide component along a direction transverse to a main axis of the second scintillation light guide component,
(iii) the second light sensor is mounted on, or optically coupled to, a third surface of the second scintillation light guide component opposite to the first surface of the second scintillation light guide component,
(iv) the fourth light sensor is mounted on, or optically coupled to, a second ledge structure extending from the fourth scintillation light guide component along a direction transverse to a main axis of the fourth scintillation light guide component, or
(v) the fourth light sensor is mounted on, or optically coupled to, a surface of the fourth scintillation light guide component that is transverse to the first surface of the first scintillation light guide component.

In some implementations, at least one of the first light sensor, the second light sensor, the third light sensor or the fourth light sensor can include a photomultiplier tube (PMT). In some implementations, the first detector channel can include a first optical medium positioned between the first and second scintillation light guide components, and the second detector channel can include a second optical medium positioned between the third and fourth scintillation light guide components. At least one of the first optical medium or the second optical medium can include at least one of an optical pad, an optical cement or an optical grease.

In some implementations, the multi-channel X-ray detector can include a first filter arranged between the first and third scintillation light guide components, and a second filter arranged between the third and fourth scintillation light guide components. In some implementations, the multi-channel X-ray detector can include an X-ray blocking component abutting the fourth scintillation light guide component, such that the fourth scintillation light guide component is arranged between the third scintillation light guide component and the X-ray blocking component.

In some implementations, the multi-channel X-ray detector can include a scintillator material lamina placed on: (i) a first surface of the first scintillation light guide component configured to be exposed to incident X-rays, (ii) a second surface of the first scintillation light guide component opposite to the first surface of the first scintillation light guide component, (iii) a first surface of the second scintillation light guide component parallel to the first surface of the first scintillation light guide component, (iv) a first surface of the third scintillation light guide component configured to be exposed to incident X-rays, (v) a second surface of the third scintillation light guide component opposite to the first surface of the third scintillation light guide component, (vi) a surface of the fourth scintillation light guide component parallel to the first surface of the third scintillation light guide component.

In some implementations, the first detector channel can include a fifth scintillation light guide component arranged transverse to the first scintillation light guide component. The first and fifth scintillation light guide components can be mechanically and optically coupled to one another. The second detector channel can include a sixth scintillation light guide component arranged transverse to the third scintillation light guide component and adjoining the fifth scintillation light guide component. The third and sixth scintillation light guide components can be mechanically and optically coupled to one another.

In some implementations, the multi-channel X-ray detector of can include an X-ray blocking component abutting the sixth scintillation light guide component, such that the sixth scintillation light guide component is arranged between the fifth scintillation light guide component and the X-ray blocking component. The first detector channel can include a fifth light sensor mounted on, or optically coupled to, the fifth scintillation light guide component, and wherein the second detector channel further comprises a sixth light sensor mounted on, or optically coupled to, the sixth scintillation light guide component.

According to at least one aspect, an X-ray detector can include a first scintillation light guide component, a first light sensor optically coupled to the first scintillation light guide component, and one or more first scintillator material laminas, each first scintillator material lamina placed on a corresponding surface of the first scintillation light guide component.

In some implementations, the one or more first scintillator material laminas can include a scintillator material sheet secured to a surface of the first scintillation light guide component, or a scintillator material layer formed by spraying a scintillator material on the surface of the first scintillation light guide component. In some implementations, the one or more first scintillator material laminas can include a first scintillator material lamina placed on a first surface of the first scintillation light guide component, and another first scintillator material lamina placed on a second surface of the first scintillation light guide component, the second surface opposite to the first surface.

In some implementations, the X-ray detector can include a second scintillation light guide component adjoining the first scintillation light guide component, a second light sensor mounted on the second scintillation light guide component, and one or more second scintillator material laminas, each second scintillator material lamina placed on a corresponding surface of the second scintillation light guide component. The X-ray detector can further include a filter arranged between the first and second scintillation light guide components.

In some implementations, the X-ray detector can include a light reflecting material placed on a side surface of the first scintillation light guide component.

According to at least one aspect, an X-ray scanning system can include an X-ray source positioned to emit scanning pencil beams along a substantially vertical direction, and a transmission X-ray detector positioned to receive the scanning pencil beams. The transmission X-ray detector can include a first scintillation light guide component, and a second scintillation light guide component arranged transverse to the first scintillation light guide component. The first and second scintillation light guide components can be mechanically and optically coupled to one another.

In some implementations, the -ray scanning system can include one or more scatter detectors positioned to receive scattering X-rays. The one or more scatter detectors can include at least one side-scatter detector positioned to receive X-rays scattering along a sideward direction. The one or more scatter detectors can include a plurality of scatter detectors positioned to be spatially distributed and tilted at different angles towards a beam plane.

In some implementations, the -ray scanning system can be configured as a vehicle inspection system. In some implementations, the transmission X-ray detector can include a third scintillation light guide component arranged transverse to the first scintillation light guide component. The first and third scintillation light guide components can be mechanically and optically connected to one another.

### BRIEF DESCRIPTION OF THE DRAWINGS

FIGS. 1A-1C show various forms of X-ray scanning beams;
FIG. 2 shows a plot illustrating output current of a light sensor or photomultiplier tube (PMT) used in an X-ray detector as a function of input light;
FIGS. 3A-3B illustrate the phenomenon of light sensor or PMT saturation in relation with PMT location, according the example embodiment herein;
FIGS. 4A-4E show various configurations for mounting a light sensor or PMT in an X-ray detector according to example embodiments herein.
FIGS. 5A and 5B show diagrams depicting X-ray detectors, according to example embodiments herein;
FIGS. 6A-6F show diagrams depicting various multi-channel multi-segment X-ray detectors, according to example embodiments herein;
FIG. 7 shows a diagram illustrating an X-ray scanning system, according to example embodiments herein;
FIG. 8 shows a spatial distribution of scatter detectors that can be used in the X-ray scanning system of FIG. 7, according to example embodiments herein; and
FIG. 9 shows a trough-shaped scatter detector, according to an example embodiment herein.

### DETAILED DESCRIPTION

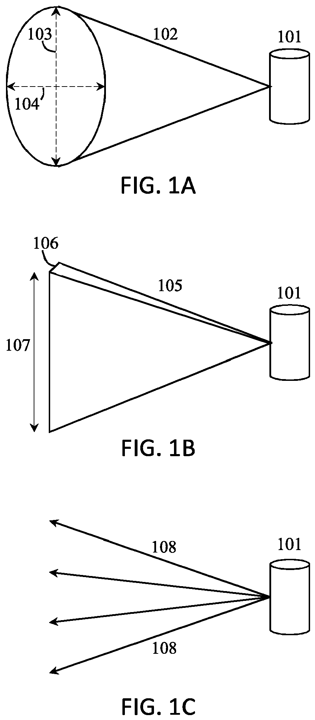

As used herein, the following terms are defined as follows:
"Scanning pencil beam" refers to a beam of X-rays spanning less than 0.02 steradians. The pencil beam is moved in a substantially planar region as illustrated in FIG. 1C.
"Beam plane" refers to a substantially planar region spanned by a scanning pencil beam.
"Transmission detector" refers to an X-ray detector configured to detect X-ray photons from X-ray beam which propagates through an object along substantially straight paths.
"Scatter detector" refers to an X-ray detector configured to detect X-ray photons scattered from an object subjected to an X-ray beam.
"SNR," shall refer to Signal to Noise Ratio.
"A light sensor saturation region" refers to a region in a transmission detector near or around a light sensor where X-ray interaction with the region causes light sensor saturation (e.g., non-linear response).

Referring now to FIGS. 1A-1C, diagrams depicting various forms or shapes of X-ray beams emitted from an X-ray source **101** are shown. Specifically, FIG. 1A shows an example of a cone beam **102.** The cone beam **102** can have an elliptical cross-section having a length **103** and a width **104.** In some implementations, the length to width ratio can be close to 1.0. In some implementations, the cone beam **102** can have a rectangular cross-section or a cross-section of some other shape. FIG. 1B shows an example of an x-ray fan beam **105** having a rectangular cross-section with a length **107** and width **106.** In some implementations, the length to width ratio can be substantially greater than 1.0. FIG. 1C shows an X-ray scanning pencil beam 108 that can be moved along a substantially planar region, for example, to scan a slice of an object. In some implementations, the X-ray scanning pencil beam can span about or less than 0.02 steradian.

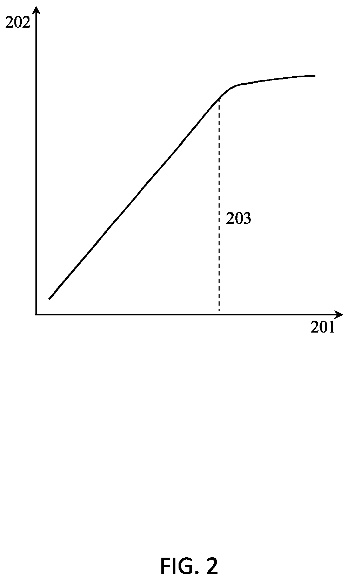

Referring now to FIG. 2, a plot illustrating output current **202** of a light sensor used in an X-ray detector as a function of input light **201.** The light sensor can include a plurality of light detector units configured to detect light or photons. In some implementations, the light sensor can include or can be a photomultiplier tube (PMT). The PMT is a photoemissive device in which absorbed photons produce an electric current signal indicative of the amount of light or photons absorbed. The plot in FIG. 2 represents the PMT output current **202** as a function of input or absorbed light **201.** The plot in FIG. 2 can be viewed as representing the characteristic function of the PMT, which includes a linear region and a saturation region. In the linear region, e.g., when the input light is below the PMT's saturation threshold **203,** the PMT responds linearly, and the output electric current is linearly proportional to the input light. However, in the saturation region the input light exceeds the saturation threshold **203** and the relationship between the input light and the output electric current is nonlinear.

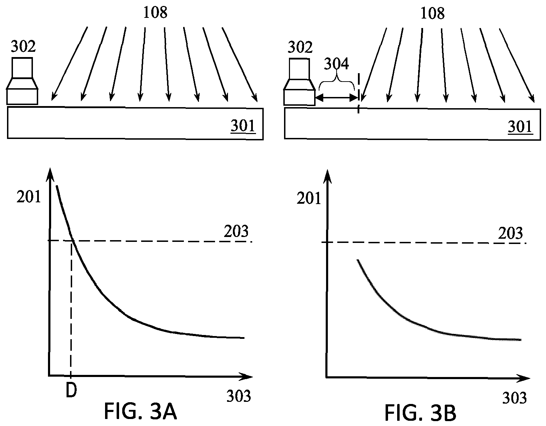

When used in an X-ray detector (e.g., a transmission X-ray detector), PMTs or light sensors are desired to operate in their linear region to accurately reflect the X-ray energy received by the X-ray detector. In the X-ray detector, a scintillator or scintillation medium can be used to absorb X-rays and emit light in response. The light can propagate within a waveguide, and a light sensor or the PMT can be mounted on and/or connected to the light guide to measure the amount of produced light, which is indicative of the amount of X-ray energy absorbed by the scintillator or scintillation medium. An important factor to ensure that the light sensor or the PMT is operating in the linear region of the respective characteristic function is the location of the light sensor or the PMT relative to areas directly exposed to X-rays. This phenomenon is illustrated in FIGS. 3A and 3B.

For an imaging system, it is generally desired to increase the number of X-ray photons captured by detectors as this improves the signal to noise ratio (SNR) due to the underlying Poisson distribution of the detected x-ray photons. In the current disclosure, systems, devices and methods to improve the detection of X-rays and improve X-ray imaging reliability and accuracy are described. In particular, various X-ray detector configurations and X-ray scanning systems are described.

Referring now to FIGS. 3A and 3B, the phenomenon of light sensor saturation in relation with the location of mounting the light sensor in an X-ray detector is illustrated, according to the example embodiment herein. A scanning pencil beam **108** interacts with a transmission X-ray detector **301** and a PMT **302** is mounted on the transmission X-ray detector **301** to measure the amount of light produced by the incident X-ray energy in the transmission X-ray detector **301.** In FIG. 3A, the PMT **302** is mounted on the transmission X-ray detector **301** at a region or location that is relatively close to a surface area that is directly exposed to the scanning pencil beam **108.** As a result, the light produced within the transmission X-ray detector **301** near the region where the PMT is mounted can be relatively high leading to a saturation of the PMT. The plot in FIG. 3A illustrates the light **201** input to the PMT **302** as a function of the distance **303** between the PMT **302** and the location where scintillation light is generated from the scanning pencil beam **108.** For example, when the distance **303** becomes smaller than some value D, the amount of light received by the PMT **302** exceeds the threshold value **203** and the PMT gets saturated.

In FIG. 3B, the scanning pencil beam **108** is configured such that the distance **303,** between the PMT **302** and the location where scintillation light is generated from the scanning pencil beam **108,** is always greater than or equal to a distance **304** to avoid PMT saturation. This can be achieved, for example, by blocking X-rays from reaching the region of the transmission X-ray detector **301** within the distance **304** from the PMT **302** to prevent excessive light from entering the PMT **302.**

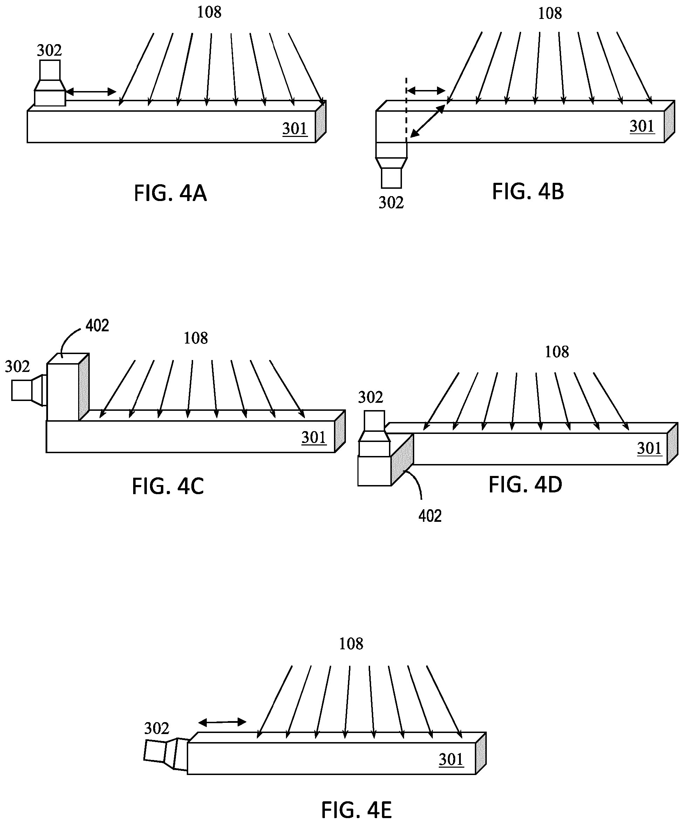

Referring now to FIGS. 4A-4E, different configurations for mounting a light sensor or PMT onto an X-ray detector to prevent saturation are illustrated, according to example embodiments herein. In FIG. 4A, the light sensor or PMT **302** can be mounted on the same surface of the X-ray detector **301** that is directly exposed to X-rays. However, the scanning pencil beam **108** can be kept at a minimum distance away from the area or region where the light sensor or PMT **302** is mounted. In FIG. 3B, the light sensor or PMT **302** can be mounted on a second surface of the X-ray detector **301** opposite to a first surface of the X-ray detector **301** that is directly exposed to X-rays (e.g., the scanning pencil beam **108**). The light, according to this approach, propagates through the depth of the X-ray detector **301** to reach the light sensor or PMT **302.** A larger surface area of the X-ray detector **301** can be exposed to the X-ray beam or a relatively shorter X-ray detector **301** can be used, compared to the approach in FIG. 4A.

In FIGS. 4C and 4D a ledge structure **402** protruding from the X-ray detector **301** can be used to mount the light sensor or PMT **302** thereon. The ledge structure **402** (also referred to herein as protruding structure **402)** can extend from X-ray detector **301** along a direction transverse to a main axis (e.g., longitudinal axis) of the X-ray detector **301.** The ledge structure **402** can be optically connected or optically coupled to the main segment or component of the X-ray detector **301** so that light can reach the light sensor or PMT **302.** This configuration allows for preventing saturation of the light sensor or PMT **302** without increasing the length of the X-ray detector **301.** In FIG. 4E, the light sensor or PMT **302** can be mounted on a third surface of the X-ray detector **301** transverse to the first surface of the X-ray detector **301** that is directly exposed to X-rays (e.g., the scanning pencil beam **108).** In this case, a larger surface area of the X-ray detector **301** can be exposed to the X-ray beam or a relatively shorter X-ray detector **301** ca be used, e.g., compared to the approach in FIG. 4A.

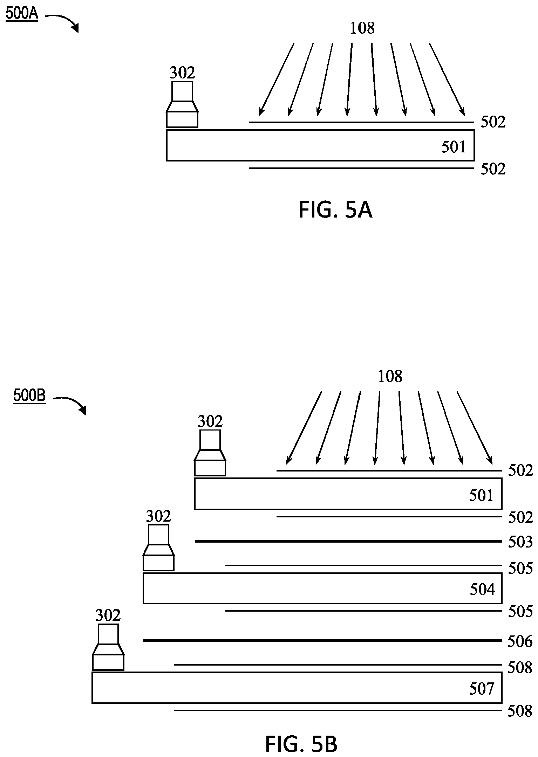

FIGS. 5A and 5B show diagrams illustrating X-ray detectors, according to example embodiments herein. The X-ray detector depicted in FIG. 5A is a single channel detector **500A,** whereas the X-ray detector **500B** depicted in FIG. 5B is a multi-channel X-ray detector. The single channel and the multi-channel X-ray detectors **500A** and **500B** depicted in FIGS. 5A and 5B, respectively, can be transmission X-ray detectors.

Referring now to FIG. 5A, the X-ray detector **500A** can include a scintillation light guide component **501** (also referred to herein as scintillation light guide **501),** and one or more scintillator material laminas **502** (also referred to herein as scintillator lamina(s) **502).** Each scintillator material lamina **502** can be placed on a corresponding surface of the scintillation light guide component **501.** While FIG. 5A shows the X-ray detector **500A** including two scintillator laminas **502;** one placed on the surface of the scintillation light guide **501** that is directly exposed to the incident X-rays or the scanning pencil beam **108** (e.g., upper surface) and the other placed on the opposite surface (e.g., the bottom surface), in some implementations, a single scintillator lamina **502** can be used (e.g., placed on the surface directly exposed to the incident X-ray beam or on the opposite bottom surface). In some implementations, the scintillator lamina(s) **502** can cover or can be placed on the whole outer surface of the scintillation light guide **501** or parts thereof that are transverse (or substantially transverse) to the path of the incident X-ray beam or the path of the scanning pencil beam **108.**

Each scintillator lamina **502** can produce scintillation light which enters and propagates within the scintillation light guide **502** to be received and measured by one or more light sensors or PMTs **302.** The scintillator lamina(s) **502** can be made of scintillator material including, but not limited to, BaFCI:Eu, Gd₂O₂S, commonly known and referred to herein as "gadox," or other scintillator material known in the field of art. The addition of such sheet scintillators improves the x-ray stopping efficiency of the transmission detector.

As used herein, a scintillation light guide **501** is configured or structured to act as a scintillator and as a light guide. The scintillation light guide **501** can be made of material that is substantially transparent to scintillation light, such as plastic, glass, mineral salts, or other transparent material with added scintillator dopants or impurities that act as scintillators within the scintillation light guide **501.** The thickness of each the scintillation light guide **501** along the direction or path of the x-ray pencil beam **108** can be at least 10 mm to allow the scintillation light to propagate through. Also, the scintillation light guide **501** is desired to be sufficiently wide to cover the incident x-ray pencil beam **108.** For example, if a pencil beam has an elliptical or rectangular cross section that is 15 mm wide when it intersects with the X-ray detector **500A,** then the scintillation light guides **501** can be at least 15 mm wide.

The combination of the scintillation light guide **501** together with the one or more scintillator laminas **502** provides solution for various technical challenges related to X-ray detectors or transmission X-ray detectors. In particular, the X-ray detector **500A** provides improved X-ray stopping efficiency and/or reduced detector thickness. Also, the X-ray detector **500A** does not suffer from self-absorption of scintillation light associated with other detectors. For example, considering a detector configuration including a light guide, not a scintillation light guide, sandwiched between two scintillator sheets, enhancing X-ray stopping efficiency (e.g., increasing the number of X-ray photons captured by the X-ray detector) calls for increased thickness of the scintillator sheets. However, there is a limit on the thickness of a scintillator sheet (e.g., defined by a mass per unit area) after which the scintillator sheet will suffer from self-absorption of scintillation light. Also, when using only a scintillator light guide **501** as the detector, increasing X-ray stopping efficiency means increased thickness or depth of the detector.

The detector configuration illustrated in FIG. 5A allows for enhanced or increased X-ray stopping efficiency (or increase in the number of X-ray photons captured by the X-ray detector) without significant increase in the thickness or depth of the detector. This is true as the scintillator laminas have higher X-ray stopping efficiency for a given thickness compared to scintillation light guides. For example, using a single scintillator lamina **502** (e.g., having about 2mm thickness) with the scintillation light guide **501** is equivalent to increasing the thickness of the scintillation light guide **501** by about 2cm. Using 2 scintillator laminas **502,** e.g., on opposite sides or surfaces of the scintillation light guide **501,** is equivalent to increasing the thickness of the scintillation light guide **501** (when using only the scintillation light guide **501** as the detector) by about 4cm. In addition, the thickness of the scintillator lamina(s) **502** can be maintained within a limit or range (e.g., defined by a mass distribution of about 250 milligrams per cm²) to prevent self-absorption of light within the scintillator lamina(s) **502.** While scintillator laminas are efficient, making them too thick will result in self-absorption of the scintillation light created within them. Also, by increasing the stopping efficiency of the X-ray detector, the overall X-ray material penetration is also increased leading to improved imaging performance.

In some implementations, the X-ray detector **500A** can include a light sensor (e.g., PMT) **302** mounted thereon. The light sensor (e.g., PMT) **302** can be mechanically and optically coupled to the scintillation light guide **501.** The light sensor (e.g., PMT) **302** can be viewed as being part of the X-ray detector **500A** or as separate component that is mechanically and optically coupled to the X-ray detector **500A.**

In some implementations, the one or more first scintillator laminas **502** can include a scintillator material sheet that is secured to (e.g., wrapped to) a surface or side of the scintillation light guide **501.** For example, the X-ray detector **500A** can include two scintillator material sheets placed on two opposite surfaces of the scintillation light guide **501** and secured to the scintillation light guide **501.** In some implementations, the one or more first scintillator laminas **502** can include a scintillator material layer formed by spraying a scintillator material on a surface of the scintillation light guide **501.** For example, the scintillator material can be sprayed on one or more surfaces of the scintillation light guide **501.**

In some implementations, the X-ray detector **500A** can include a light reflecting material placed on a side surface of the scintillation light guide **501.** For example, the X-ray detector **500A** can include two scintillator laminas **502** positioned or placed on two opposite surfaces (e.g., top and bottom) of the scintillation light guide **501** and two sheets or layers of light reflecting material placed or positioned on two opposite side surfaces (e.g., front and back surface in FIG. 5A). The sheet(s) or layer(s) of light reflecting material can include one or more enhanced specular reflectors. The light reflecting material or light reflectors can be placed on one or more surfaces of the scintillation light guide **501** that are parallel to the incident X-ray beam (e.g., scanning pencil beam **108**), while the scintillator lamina(s) **502** can positioned or placed on one or more surfaces of the scintillation light guide **501** that are transverse to the incident X-ray beam (e.g., scanning pencil beam **108**).

Referring now to FIG. 5B, a multi-layer X-ray detector **500B** is shown, according to example embodiments herein. The X-ray detector **500B** depicted in FIG. 5B is shown to include three detector channels. Considering the detector configurations in FIGS. 5A and 5B, the X-ray detector can include any number of detector channels (e.g., one or more). Each detector channel of the X-ray detector **500B** can be viewed as being similar to the X-ray detector channel **500A** of FIG. 5A. For example, the first channel can include the scintillation light guide **501** and one or more scintillator laminas **502** as described above in relation to FIG. 5A. The second detector channel can include the scintillation light guide **503** and one or more scintillator laminas **505** similar to the detector **500A.** The third detector channel can include the scintillation light guide **507** and one or more scintillator laminas **508** similar to the detector **500A.** Each detector channel can include (or can be mechanically and optically coupled to) a light sensor or PMT **302** mounted on the corresponding scintillation light guide (e.g., scintillation light guide **501, 504** or **507**).

In some implementations, an opaque medium or filter can be arranged between consecutive or adjacent detector channels (or consecutive or adjacent scintillation light guides). For example, filter **503** can be arranged between the first and second detector channels or between the scintillation light guides **501** and **504.** Also, the filter **506** can be arranged or positioned between the second and third detector channels or between the scintillation light guides **504** and **507.** The filter(s) **503** and/or **506** can separate adjacent channels. The filter(s) can be made of material and thickness which prevents light from escaping from one detector channel to another, including but not limited paper, cardboard, plastic, or sheet metals, which include with no limitation Steel and Copper.

In some implementation, to optimize the detection efficiency and energy separation between detector channels, scintillation light guides and scintillator laminas can have different thicknesses within the same multi-channel detector **500B.** For example, the thicknesses of the scintillation light guides and scintillator laminas can vary from one channel to another.

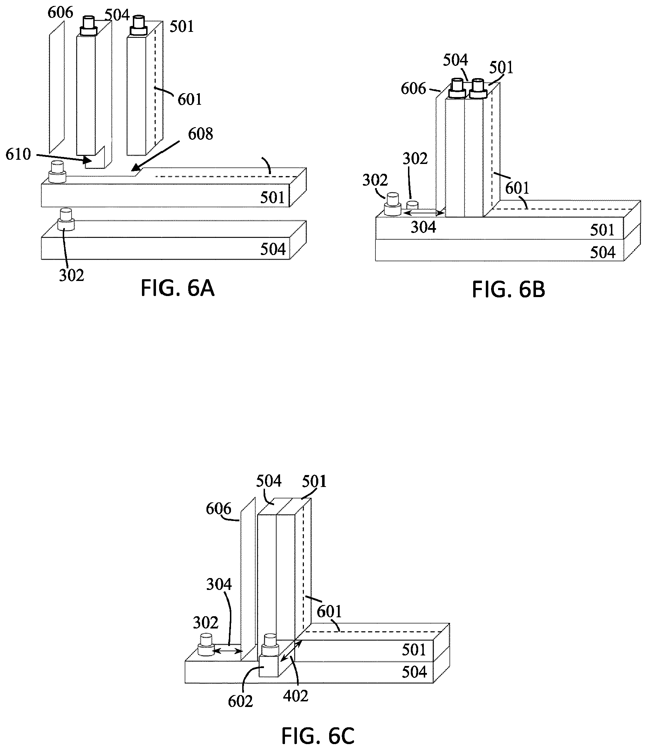

Referring now to FIGS. 6A-6F, various configurations of multi-channel multi-segment X-ray detectors are depicted, according to example embodiment herein. Each channel can include at least two scintillation light guides that are mechanically and optically coupled to each other. For example, the multi-channel X-ray detector can include a first detector channel and a second detector channel. The detector channel can include a first scintillation light guide and a second scintillation light guide arranged transverse to the first scintillation light guide, where the first and second scintillation light guides can be mechanically and optically coupled to one another. The second detector channel can include a third scintillation light guide adjoining the first scintillation light guide of the first channel, and a fourth scintillation light guide arranged transverse to the third scintillation light guide. The fourth scintillation light guide can be adjoining the second scintillation light guide of the first channel. The third and fourth scintillation light guides can be mechanically and optically coupled to one another.

Referring now to FIGS. 6A-6E, the first detector channel can include the scintillation light guides **501** which are mechanically and optically coupled to each other. Broken lines **601** mark the intersection of the scanning pencil beam with the detector of FIG. 6A. The second channel can include the scintillation light guides **504** which are mechanically and optically coupled to each other. It is to be noted that scintillation light guides of different channels can be mechanically coupled, but optically isolated from one another. In some implementations, light can propagate between scintillation light guides of the same channel but not between scintillation light guides of different detector channels.

In some implementations, for each scintillation light guide **501** or **504,** a corresponding light sensor or PMT **302** can be mounted thereon. Scintillation light can propagate within a scintillation light guide or between scintillation light guides of the same channel to be received or absorbed by the light sensors or PMTs **302** mounted on the scintillation light guide of the channel. In some implementations, the multi-channel detector can include one or more light sensors or PMTs per channel, or one or more light sensors or PMTs per scintillation light guide.

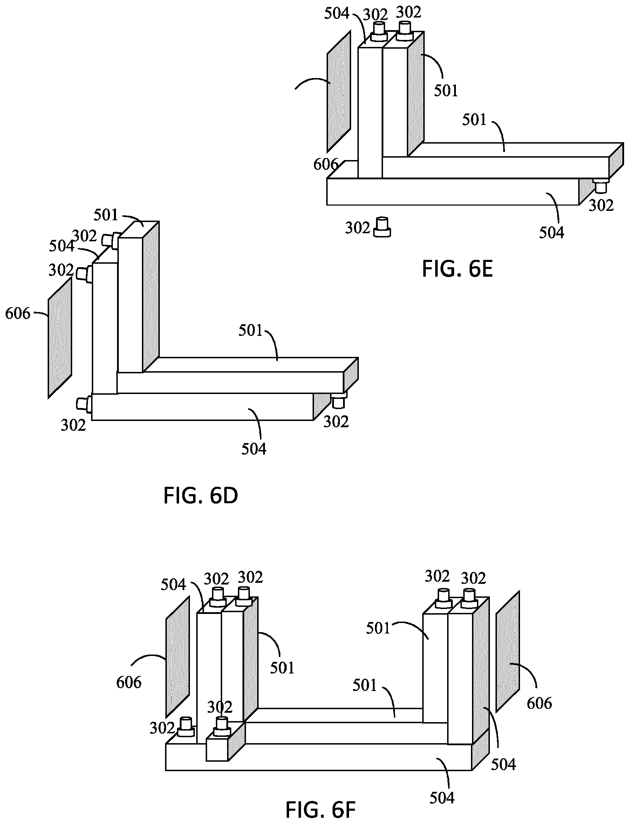

The light sensors or PMTs can be mounted in different ways. For example, the light sensors or PMTs for the horizontal scintillation light guides **501** and **504** can be mounted according to at least one of:
(i) the light sensor or PMT for the horizontal scintillation light guide **501** can be mounted on a portion of the surface of the horizontal scintillation light guide **501** directly exposed to the incident X-rays, such that the portion of the surface of the horizontal scintillation light guide component **501** is shielded from the incident X-rays by at least the vertical scintillation light guides **501** and **504** as depicted in FIGS 6A and 6B,
(ii) the light sensor or PMT for the horizontal scintillation light guide **501** can be mounted on a ledge structure **602** extending from the horizontal scintillation light guide **501** along a direction transverse to a main axis of the horizontal scintillation light guide **501** as depicted in FIG. 6C,
(iii) the light sensor or PMT of the horizontal scintillation light guide **501** can be mounted on a second surface of the horizontal scintillation light guide **501** that is transverse to the surface of the horizontal scintillation light guide **501** directly exposed to the incident X-rays as depicted in FIG. 4E,
(iv) the light sensor or PMT of the horizontal scintillation light guide **501** can be mounted on a third surface of the horizontal scintillation light guide **501** that is opposite to the surface directly exposed to the incident X-rays as depicted in FIGS. 6D and 6E,
(v) the light sensor or PMT of the horizontal scintillation light guide **504** can be mounted on a portion of a surface of the horizontal scintillation light guide **504** that is parallel to the surface of the horizontal scintillation light guide **501** that is exposed to incident X-rays, such that the portion of the surface of the horizontal scintillation light guide **504** is shielded from the incident X-rays by at least the vertical scintillation light guides **501** and **504** as depicted in FIGS 6A and 6B,
(vi) the light sensor or PMT of the horizontal scintillation light guide **504** can be mounted on a ledge structure extending from the horizontal scintillation light guide **504** along a direction transverse to a main axis of the horizontal scintillation light guide **504** (similar to FIG. 4D), or
(vii) the light sensor or PMT of the horizontal scintillation light guide **504** can be mounted on a second surface of the horizontal scintillation light guide **504** that is transverse to the surface of the horizontal scintillation light guide **501** exposed to incident X-rays, e.g., as depicted in FIG. 6D.

The light sensors or PMTs for the vertical (or transverse) scintillation light guides **501** and **504** can be mounted according to at least one of:
(i) the light sensor or PMT of vertical scintillation light guide **501** can be mounted on a second surface of the vertical scintillation light guide **501** that is transverse to the surface of the vertical scintillation light guide **501** exposed to incident X-rays,
(ii) the light sensor or PMT of vertical scintillation light guide **501** can be mounted on a ledge structure extending from the vertical scintillation light guide **501** along a direction transverse to a main axis of the vertical scintillation light guide **501,**
(iii) the light sensor or PMT of vertical scintillation light guide **501** can be mounted on a surface of the light sensor or PMT of vertical scintillation light guide **501** opposite to the surface of the light sensor or PMT of vertical scintillation light guide 501 exposed to incident X-rays,
(iv) the light sensor or PMT of vertical scintillation light guide **504** can be mounted on a ledge structure extending from the light sensor or PMT of vertical scintillation light guide **504** along a direction transverse to a main axis of the light sensor or PMT of vertical scintillation light guide **504** (e.g., similar to FIGS. 6A and 6B); or
(v) the light sensor or PMT of vertical scintillation light guide **504** can be mounted on a surface of the light sensor or PMT of vertical scintillation light guide **504** can be that is transverse to the surface of the horizontal scintillation light guide **501** exposed to incident X-rays.

In some implementations, a detector channel can include an optical medium positioned between coupled scintillation light guides of the channel. For example, an optical medium can be positioned between scintillation light guides **501** of the first channel. An optical medium can be positioned between scintillation light guides **504** of the second channel. The optical medium for any channel can include at least one of an optical pad, an optical cement or an optical grease.

Adjacent scintillation light guides **501** and **504** of different channels can be separated by an opaque medium placed between them to prevent propagation of light between them. For example, horizontal scintillation light guides **501** and **504** can be separated by an opaque medium and the same can be true for the vertical scintillation light guides **501** and **504.** In FIGS. 5A and 5B, the horizontal scintillation light guide **501** can include a receding portion **608** positioned to engage a receding portion **610** of the vertical scintillation light guide **504.** To prevent propagation of light between the two scintillation light guides, an opaque medium can separate (or can be placed between) the two receding portion **608** and **610.**

The multi-channel X-ray detector can include an X-ray blocking component **606** vertical or transverse scintillation light guide **504,** as depicted in FIGS. 6A-6F. In some implementations, any of the scintillation light guides **501** or **504** can have one or more scintillator lamina(s) placed on one or more respective surface as described above with regard to FIGS. 5A and 5B.

In some implementations, the first detector channel can include another scintillation light guide **501,** e.g., arranged transverse to the horizontal scintillation light guide **501,** and mechanically and optically coupled to horizontal scintillation light guide **501.** Also, the second detector channel can include an additional scintillation light guide **504** arranged transverse to the horizontal scintillation light guide **504** and adjoining the additional scintillation light guide **501,** where the horizontal scintillation light guide **504** and the additional scintillation light guide **504** are mechanically and optically coupled to one another. FIG. 6F shows such example configuration with three scintillation light guides in each channel, e.g., forming a U-shape. The multi-channel detector of FIG. 6F can include another an X-ray blocking component abutting the additional scintillation light guide **504** of the second channel. Each of the additional scintillation light guides **501** and **504** can include a corresponding light sensor or PMT **302** mounted thereon. As shown in FIG. 6F.

While FIGS. 6A-6F depict dual-channel X-ray detectors, it is to be understood that the number of channels can be more than two. Also, the placement of the light sensors or PMTs **302** can be according to any of the configurations described in relation with FIGS 4A-4E. In some implementations, adjacent channels and adjacent segments of different channels of the X-ray detectors in FIGS. 6A-6F can be implemented as described in FIGS 5A and 5B, e.g., with scintillator laminas and filters (or X-ray attenuating media) between adjacent segments of different channels.

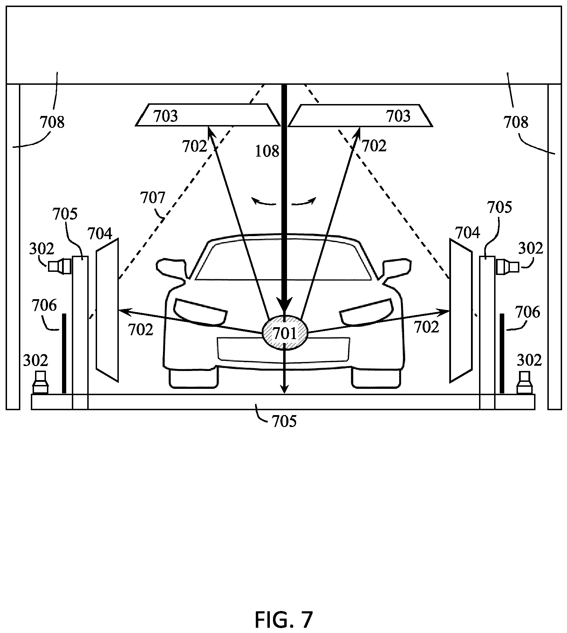

Referring now to FIG. 7, an X-ray scanning system is shown, according to example embodiments herein. A. X-ray source can be mounted on a structure **708,** and positioned to emit a scanning pencil beam **108** in a downward direction. The scanning pencil beam **108** can span a beam plane **707** to inspect vehicles or types of objects (e.g., cargo containers). The beam **108** can interact with a scattering object **701** generating x-ray scatter **702.** Part of the x-ray scatter which travels in the backward direction relative to the scanning pencil beam **108** can be captured by one or more back-scatter detectors **703** mounted above the inspected vehicle, while scatter traveling in the sideward direction can be captured by one or more side-scatter detectors **704** mounted to one or more sides of the inspected vehicle. X-rays which penetrate through the vehicle can be captured by a transmission detector **705** placed below and to the sides of the inspected vehicle.

The transmission detector **705** can include one or more channels. For example, the transmission detector **705** can include two or more channels, e.g., each sensitive to a different part of the energy spectrum of the incident scanning pencil beam **108.** Each detector channel can include one or more light sensors or PMTs **302** and/or one or more X-ray blocking components (also referred to herein as beam-stop(s)) **706.** A beam stop can be positioned to intersect with the incident x-ray beam plane. The beam stop can be made of materials and thicknesses capable of attenuating the incident x-ray beam and hence limiting the x-ray dose outside the scanning area. For example, for an x-ray scanning pencil beam of peak energy of 220 kV, a beam stop comprising 5 mm of lead can significantly cut the x-ray dose outside the scanning area, while 9 mm of lead would be used to achieve a similar dose reduction for an X-ray beam with peak energy of 320 kV. To be effective, a beam stop can be sufficiently wide to cover the incident X-ray beam. For example, for a scanning pencil beam with an elliptical or rectangular cross section measuring 15 mm in width when it reaches the beam stop, said beam stop can be 15 mm or wider to be effective. The height of the beam stop can be such that it covers the edges of the beam plane. The beam-stops can also mitigate PMT saturation.

The X-ray scanning system can include an X-ray source positioned to emit a scanning pencil beam along a vertical direction or a substantially vertical direction. For example, the X-ray source can be positioned to scan objects from above (or from below). The X-ray scanning system can include a transmission X-ray detector positioned to receive the scanning pencil beam. The transmission X-ray detector can include a first scintillation light guide and a second scintillation light guide arranged transverse to the first scintillation light guide component, the first and second scintillation light guide components mechanically coupled and optically connected to one another. That is, the X-ray scanning system can include an X-ray source positioned to emit a scanning pencil beam along a vertical or substantially vertical direction and a single channel multi segment transmission X-ray detector. In some implementations, the transmission X-ray detector can further include a third scintillation light guide component arranged transverse to the first scintillation light guide component, such that the first and third scintillation light guide components can be mechanically and optically coupled to one another.

In some implements, the transmission X-ray detector can include any detector described above in relation with FIGS. 5A-6F. For example, the transmission X-ray detector can include a single channel detector as described in relation with FIG. 5A, a multi-channel detector as described in relation to FIG. 5B, a single channel multi-segment detector (e.g., L-shaped or U-shaped) or a multi-channel multi-segment detector as described in relation with FIGS. 6A-6F.

The X-ray scanning system may or may not include scatter detectors. For example, the X-ray scanning system can include one or more one or more scatter detectors positioned to receive scattering X-rays. In some implementations, the one or more scatter detectors can include at least one side-scatter detector, such as scatter detectors **704,** positioned to receive X-rays scattering along a sideward direction or scattering from a side surface (e.g., not top or bottom) of the inspected vehicle or object. For example, each scatter detector(s) can be positioned to face a side or a side view of the inspected vehicle or object **701.**

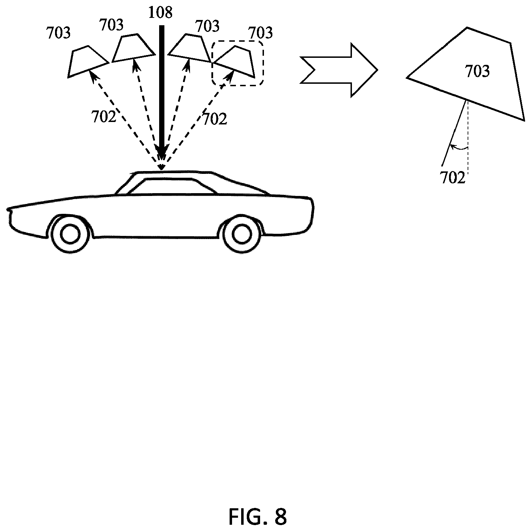

In some implementations, the X-ray scanning system can include a plurality of scatter detectors positioned to be tilted at different angles towards the beam plane **707,** as shown in FIG. 8. Tilting a detector' plane towards the scanning pencil beam plane **707** improves the detection solid angle relative to the region where scatter is created. This in turn increases the number of x-ray photons captured by the detector and hence improves the SNR due to the underlying Poisson distribution of the number of detected photons. Hence, as illustrated in FIG. 8, one or more scatter detectors **703** can be tilted towards the scanning pencil beam plane **707,** e.g., by 5 degrees or more. The scatter detector tilt is not limited to top detectors and can be applied to side scatter detectors, too.

Increasing the overall detector area increases the number of scattered x-ray photons captured by the detectors, which in turn increases the SNR. Hence, embodiments of the disclosed invention can have multiple scatter detectors, as many as can practically fit into a scanner, stacked horizontally or vertically, on either side of the scanning pencil beam plane, to the side, above, or below scanned vehicles.

To accommodate practical constraints on the overall scanner size, some embodiments of the disclosed invention contain only back-scatter detectors, mounted above a scanned vehicle. Alternatively, other embodiments of the disclosed invention contain only side-scatter detectors, mounted on one or two sides of a scanned vehicle. Said embodiments with back-scatter or side-scatter detectors may further comprise a transmission detector.

The X-ray scanning system can be (or can be used as) a vehicle inspection system. The X-ray scanning system can be used to inspect other objects, such as cargo containers and/or relatively large boxes or objects, among others.

Referring back to FIG. 7, the transmission detector **705** can include three segments or three scintillation light guides, e.g., including a substantially horizontal segment below the scanned vehicle and two substantially vertical segments to the sides of the inspected vehicle. In some implementations, the transmission detector **705** can include two or more channels with scintillation light guides, scintillators laminas and filters (such as filters **503** and **506)** separating adjacent segments of adjacent channels. The joints between segments in the same channel can be constructed such that there is a path for scintillation light to travel between segments. To limit PMT saturation, cutouts can be made in the horizontal and vertical scintillating light guides of different channels as illustrated in receding portions **608** and **610** of FIGS. 6A and 6B. Surfaces of horizontal and vertical scintillation light guides from the same channel can be touching directly or coupled with an optical medium, including without limitation an optical pad or grease, to improve the propagation of scintillation light between scintillation light guides of the same channel.

In some implementations, the X-ray scanning system can include an X-ray source and one or more scatter detectors (e.g., with or without a transmission X-ray detector). The one or more scatter detectors can include a side detector (such as detector **704**), a plurality of scatter detectors tilted towards the scattering pencil beam plane depicted in FIG. 8 and/or a one or more scatter detectors mounted above the inspected object. In some implementations, the X-ray scanning system can further include a transmission detector as described in relation with FIGS. 5A-7. The transmission detector can include a single channel L-shaped detector, a multi-channel L-shaped detector, single channel U-shaped detector, a multi-channel U-shaped detector.

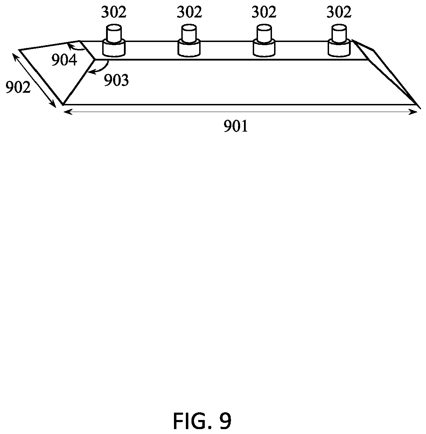

Referring now to FIG. 9, a scatter X-ray detectors is shown, according to an example embodiment herein. The scatter detector can be used to capture scattered x-ray photons in the backward and sideward directions. The scatter detector can include an outer shell made of material including but not limited to plastic, metal, carbon-fiber, or wood. The scatter detector can include an inner surface that can be covered with light reflective material, including but not limited to paint, paper, Aluminum foil, or Teflon, and a scintillator material including but not limited to BaFCI:Eu or gadox. The scintillator material generates scintillation light from X-ray photons which enter the detector. The scatter detector can further include one or more light sensors or PMTs **302** to convert the scintillation light to electric current. The scatter detector can have a trough shape characterized by a trapezoidal cross section parallel to its minor axes with a base angle **904** of 95 degrees or more. The cross section parallel to the detector's major axis can be either rectangular or trapezoidal, with a base angle **903** of 90 degrees or more. The scatter detector can have a length greater or equal to 20 cm, measured along its major axis **901,** and a width greater than or equal to 10 cm, measured along its minor axis **902.** The trough-shaped detector has at least two advantages. First, it has a higher light collection efficiency since a light photon is reflected fewer times off the detector walls before it reaches a light sensor or a PMT. Second, it has smaller overall surface area, which reduces the amount of scintillator and reflective material required to cover the inner detector surfaces, hence reducing its cost.

The trough-shaped scatter detector in FIG. 9 can be used in the X-ray scatter system described above in relation with FIG. 7. Further, the trough-shaped detector can be used in other embodiments, beyond those disclosed herein, including without limitation, embodiments where the scanning system is mounted on a platform capable of road travel, including without limitation a motorized or non-motorized vehicle or trailer.

Embodiments described herein of the X-ray scanning system have the X-ray source and detectors mounted on a stationary structure, whereby scanned vehicles are driven, or moved by some other means, through the scanning pencil beam plane. To avoid exposing occupants of scanned vehicles to x-ray radiation, the scanning system can be moved relative to a scanned vehicle. Hence, alternative embodiments of the disclosed invention can have the source and detectors mounted on a gantry which moves relative to an inspected vehicle.

Each embodiment described herein may comprise additional hardware and software devices as required to perform its intended function. Examples include data acquisition and control devices and computers with software programs for image display and storage.

## Claims

1. A multi-channel X-ray detector comprising:
a first detector channel including:
a first scintillation light guide component; and
a second scintillation light guide component arranged transverse to the first scintillation light guide component, the first and second scintillation light guide components mechanically and optically coupled to one another; and
a second detector channel including:
a third scintillation light guide component adjoining the first scintillation light guide component; and
a fourth scintillation light guide component arranged transverse to the third scintillation light guide component and adjoining the second scintillation light guide component, the third and fourth scintillation light guide components mechanically and optically coupled to one another.

2. The multi-channel X-ray detector of claim 1, wherein the first detector channel further comprises a light sensor mounted on the first scintillation light guide component and a second light sensor mounted on the second scintillation light guide component, and wherein the second detector channel further comprises a third light sensor mounted on the third scintillation light guide component and a fourth light sensor mounted on the fourth scintillation light guide component.

3. The multi-channel X-ray detector of claim 2, wherein the first scintillation light guide component includes a first surface configured to be exposed to incident X-rays, and wherein the first and third light sensors are mounted according to at least one of:
the first light sensor is mounted on a portion of the first surface of the first scintillation light guide component, such that the portion of the first surface of the first scintillation light guide component is shielded from the incident X-rays by at least the second and fourth scintillation light guide components;
the first light sensor is mounted on a first ledge structure extending from the first scintillation light guide component along a direction transverse to a main axis of the first scintillation light guide component;
the first light sensor is mounted on a second surface of the first scintillation light guide component that is transverse to the first surface of the first scintillation light guide component;
the first light sensor is mounted on a third surface of the first scintillation light guide component opposite to the first surface of the first scintillation light guide component;
the third light sensor is mounted on a portion of a first surface of the third scintillation light guide component parallel to the first surface of the first scintillation light guide component, such that the portion of the first surface of the third scintillation light guide component is shielded from the incident X-rays by at least the second and fourth scintillation light guide components;
the third light sensor is mounted on a second ledge structure extending from the third scintillation light guide component along a direction transverse to a main axis of the third scintillation light guide component; or
the third light sensor is mounted on a second surface of the third scintillation light guide component that is transverse to the first surface of the first scintillation light guide component.

4. The multi-channel X-ray detector of claim 2, wherein the second scintillation light guide component includes a first surface configured to be exposed to incident X-rays, and wherein the second and fourth light sensors are mounted according to at least one of:
the second light sensor is mounted on a second surface of the second scintillation light guide component that is transverse to the first surface of the second scintillation light guide component;
the second light sensor is mounted on a first ledge structure extending from the second scintillation light guide component along a direction transverse to a main axis of the second scintillation light guide component;
the second light sensor is mounted on a third surface of the second scintillation light guide component opposite to the first surface of the second scintillation light guide component;
the fourth light sensor is mounted on a second ledge structure extending from the fourth scintillation light guide component along a direction transverse to a main axis of the fourth scintillation light guide component; or
the fourth light sensor is mounted on a surface of the fourth scintillation light guide component that is transverse to the first surface of the first scintillation light guide component.

5. The multi-channel X-ray detector of claim 2, wherein at least one of the first light sensor, the second light sensor, the third light sensor or the fourth light sensor includes a photomultiplier tube (PMT).

6. The multi-channel X-ray detector of claim 1, wherein the first detector channel further comprises a first optical medium positioned between the first and second scintillation light guide components, and wherein the second detector channel further comprises a second optical medium positioned between the third and fourth scintillation light guide components.

7. The multi-channel X-ray detector of claim 1, wherein at least one of the first optical medium or the second optical medium includes at least one of an optical pad, an optical cement or an optical grease.

8. The multi-channel X-ray detector of claim 1, further comprising:
a first filter arranged between the first and third scintillation light guide components; and
a second filter arranged between the third and fourth scintillation light guide components.

9. The multi-channel X-ray detector of claim 1, further comprising an X-ray blocking component abutting the fourth scintillation light guide component, such that the fourth scintillation light guide component is arranged between the third scintillation light guide component and the X-ray blocking component.

10. The multi-channel X-ray detector of claim 1, further comprising a scintillator material lamina placed on:
a first surface of the first scintillation light guide component configured to be exposed to incident X-rays;
a second surface of the first scintillation light guide component opposite to the first surface of the first scintillation light guide component;
a first surface of the second scintillation light guide component parallel to the first surface of the first scintillation light guide component;
a first surface of the third scintillation light guide component configured to be exposed to incident X-rays;
a second surface of the third scintillation light guide component opposite to the first surface of the third scintillation light guide component; or
a surface of the fourth scintillation light guide component parallel to the first surface of the third scintillation light guide component.

11. The multi-channel X-ray detector of claim 1, wherein the first detector channel further comprises a fifth scintillation light guide component arranged transverse to the first scintillation light guide component, the first and fifth scintillation light guide components mechanically and optically coupled to one another; and
wherein the second detector channel further comprises a sixth scintillation light guide component arranged transverse to the third scintillation light guide component and adjoining the fifth scintillation light guide component, the third and sixth scintillation light guide components mechanically and optically coupled to one another.

12. The multi-channel X-ray detector of claim 11, further comprising an X-ray blocking component abutting the sixth scintillation light guide component, such that the sixth scintillation light guide component is arranged between the fifth scintillation light guide component and the X-ray blocking component.

13. The multi-channel X-ray detector of claim 11, wherein the first detector channel further comprises a fifth light sensor mounted on the fifth scintillation light guide component, and wherein the second detector channel further comprises a sixth light sensor mounted on the sixth scintillation light guide component.
